# EUROPEAN PATENT SPECIFICATION

(11) **EP 4 043 983 B1**
(45) Date of publication and mention of the grant of the patent: **19.08.2026**
(21) Application number: 20869540.3
(22) Date of filing: 28.09.2020
(51) Int. Cl.: G05D 1/00

(54) **METHOD AND DEVICE FOR CONTROLLING TRAVEL OF AUTOMATED GUIDED VEHICLE**
VERFAHREN UND VORRICHTUNG ZUR STEUERUNG DER FAHRT EINES AUTOMATISCH GEFÜHRTEN FAHRZEUGS
PROCÉDÉ ET DISPOSITIF DE COMMANDE DE DÉPLACEMENT DE VÉHICULE À GUIDAGE AUTOMATIQUE

(30) Priority: 29.09.2019 CN 201910935629
(43) Date of publication of application: 17.08.2022
(60) Divisional application: 26185185.1 / 4 782 949
(73) Proprietor: Hangzhou Hikrobot Co., Ltd., Hangzhou, Zhejiang 310051 (CN)
(72) Inventor: MIAO, Songhua, Hangzhou, Zhejiang 310051 (CN)
(74) Representative: Epping - Hermann - Fischer
(86) International application number: PCT/CN2020/118520
(87) International publication number: WO 2021/058010

(56) References cited:
- CN-A- 107 577 227
- CN-A- 107 831 019
- CN-A- 108 007 470
- CN-A- 110 162 029
- CN-A- 110 162 058
- CN-A- 110 398 253
- CN-A- 110 398 965
- KR-A- 20190 098 094
- US-A1- 2011 301 800
- US-A1- 2014 277 691
- US-A1- 2016 131 494
- US-A1- 2018 267 540

## Description

The present application claims the priority of the Chinese patent application filed on September 29, 2019 with the application number 201910935629.8 and the invention title is "METHOD AND DEVICE FOR CONTROLLING TRAVEL OF AUTOMATED GUIDED VEHICLE'.

### Technical Field

The present application relates to the technical field of AGV (Automated Guided Vehicle), and in particular, to a method and device for controlling the travel of automatic guided vehicle.

### Background

AGV (Automated Guided Vehicle) refers to a transport vehicle equipped with automatic guidance devices such as electromagnetic or optical automatic guidance devices, which can travel along a prescribed guidance path, and has safety protection and various transfer functions. It is a truck that does not require a driver in industrial applications, and uses a rechargeable battery as its power source.

AGV can be controlled by computer, electronic control equipment, laser reflector, etc. For example: when a certain part of the workshop needs auxiliary materials, the staff will input the relevant information of the request to add auxiliary materials to the computer terminal, and the computer terminal will then send the relevant information to the central control room, and professional technicians will edit the AGV instructions. With the cooperation of the control equipment, this instruction is finally received and executed by the AGV, and the auxiliary materials are sent to the corresponding location.

Also, in the art are known some methods or devices as described in their respective documents.

For example, US2011301800A1 discloses an automatic guided vehicle and a method for drive control enable driving of the vehicle with a coordinate system, while using designation of a movement position by address. The automatic guided vehicle measures a surrounding state by a laser, performs matching between map data and measurement data obtained by the measuring to obtain the current position, and runs, following preset route data, based on the obtained current position. The vehicle includes a data memory that stores correspondence information between addresses of certain positions in a drive area where the vehicle runs and coordinates that are set in the drive area, and a processing section that, when a movement target position is designated by address from a host computer, transforms the designated address into coordinates, based on the correspondence information between addresses and coordinates, and drives the vehicle, following the route data to the coordinates corresponding to the address.

US2014277691A1 discloses a system for automated inventory management and material handling removes the requirement to operate fully automatically or all-manual using conventional vertical storage and retrieval (S&R) machines. Inventory requests to place palletized material into storage at a specified lot location or retrieve palletized material from a specified lot are resolved into missions for autonomous fork trucks, equivalent mobile platforms, or manual fork truck drivers (and their equipment) that are autonomously or manually executed to effect the request. Automated trucks plan their own movements to execute the mission over the warehouse aisles or roadways sharing this space with manually driven trucks. Automated units drive to planned speed limits, manage their loads (stability control), stop, go, and merge at intersections according human driving rules, use on-board sensors to identify static and dynamic obstacles, and human traffic, and either avoid them or stop until potential collision risk is removed.

US2018267540A1 discloses a movement control system, a movement control device, and a program capable of generating a path corresponding to a more detailed surrounding environment are provided. A movement control system of an embodiment includes a first map generating unit and a second map generating unit. The first map generating unit generates first map information indicating a distribution of existence states related to a possibility of existence of a physical object on the basis of a position of the physical object measured by a measurement unit. The second map generating unit generates second map information indicating the existence state of the physical object of which a period during which the existence state is maintained up to a current time is within a predetermined period from the first map information.

US2016131494A1 discloses an autonomous driving vehicle, an autonomous driving management apparatus, and a method of controlling the same. The autonomous driving vehicle includes: a wireless communication unit configured to receive position information about the vehicle; a storage unit configured to store an electronic map; an input unit configured to receive a destination; a driving unit configured to adjust a travelling speed and a travelling direction; and a controller configured to search for a path from a point corresponding to the position information to a point corresponding to the destination in the electronic map, and control the vehicle to travel the approved section through the driving unit when receiving an approval of an occupation right for one or more sections included in the path through the wireless communication unit.

### SUMMARY

The embodiments of the present application propose an AGV travel control method and apparatus, so as to improve the adaptability of the AGV to complex environments.

The invention is set out in the appended set of claims.

The embodiment of the present application, takes into account the actual road conditions of different road sections on the AGV task path, configures travel control parameter for different road sections, and reads the travel control parameter of the road section in real time during the traveling process of the AGV, so that the AGV can adapt to complex environments, and improve the efficiency of the AGV to perform tasks.

### Brief Description of the Drawings

In order to explain the embodiments of the present application and the technical scheme of the prior art more clearly, the drawings used in the prior art and the embodiments will be described briefly in the following, and it is apparent that the drawings in the description below are only some embodiments of the present application and those skilled in the art can obtain other drawings according to these drawings without inventive efforts.
FIG. 1 is a flowchart of an AGV travel control method provided by an embodiment of the present application;
FIG. 2 is a flowchart of an AGV travel control method provided by another embodiment of the present application;
FIG. 3 is a flowchart of an AGV travel control method provided by yet another embodiment of the present application;
FIG. 4 is a flowchart of an AGV travel control method provided by yet another embodiment of the present application;
FIG. 5 is a schematic structural diagram of an AGV travel control apparatus provided by an embodiment of the present application.

### Detailed Description of the Invention

The technical solution in the embodiments of the present application will be clearly and completely described in conjunction with the drawings in the embodiments of the present application, obviously, the embodiments described are only part of the embodiments of the present application and not all of them. Based on the embodiments in the present application, all other embodiments obtained by those of ordinary skilled in the art on the basis of the present application fall under the protection of the present application.

In the related art, AGV is traveling on the path at the same speed, without considering the complexity of the driving environment, for example: the actual road conditions of different roads are different, some road conditions are good, and some road conditions are poor, if the speed is same, the travel efficiency will be low, and the task will not be completed at the optimal speed or quality. In addition, it is not considered that AGV may need to enable some specific functions when traveling on some roads, such as voice playback, and these related technologies are not considered.

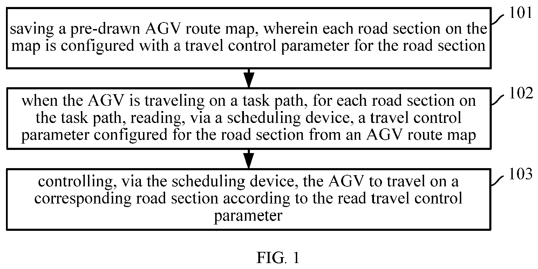

FIG. 1 is a flowchart of an AGV travel control method provided by an embodiment of the present application, and its specific steps are as follows:
Step 101: saving a pre-drawn AGV route map, wherein each road section on the map is configured with a travel control parameter for the road section.

The AGV route map is a route map for the entire travel range of the AGV. A road between two adjacent road section nodes on the map is called a road section. For any road section in the AGV route map, the travel control parameter for the road section can be configured.

The AGV route map can be stored in the database of the server section, and the scheduling device reads it from the database when it is used, or the AGV route map can be directly stored in the scheduling device, which are within the protection scope of the present application. The scheduling device is a device used to implement the AGV travel control method of the present application. The scheduling device uses hardware resources such as computing resources, communication resources, and storage resources to operate; the scheduling device can be on the server side or in the AGV, both of which are within the protection scope of the present application.

The travel control parameters include: one of the following or any combination thereof: a speed, an acceleration, a positioning accuracy configured with a positioning position and executing an action, where any combination refers to that at least two of the speed, acceleration, the positioning position configured with the positioning position, and positioning accuracy configured with a positioning position and executing an action are combined to obtain the travel control parameters. The speed includes: one of the maximum speed and the minimum speed or a combination thereof (i.e. the combination of the maximum speed and the minimum speed). The acceleration includes: one of the maximum acceleration and the minimum acceleration or a combination of thereof (i.e. the combination of the maximum acceleration and the minimum acceleration). For the positioning accuracy configured with a positioning position and executing an action, for example: when the AGV is to be docked with some stations, such as elevators, high positioning accuracy is required at this time.

Wherein the road refers to the geographical road within the travel range of the AGV, that is, the road divided according to the geographical division method.

Step 102: when the AGV is traveling on a task path, for each road section on the task path, reading, via a scheduling device, a travel control parameter configured for the road section from an AGV route map.

The task path includes at least one road/section, which is the section that the AGV needs to travel to perform the task. The travel control parameters of each road section can be customized according to the actual situation of the road section.

Step 103: controlling, via the scheduling device, the AGV to travel on a corresponding road section according to the read travel control parameter.

Optionally, when the travel control parameter includes a speed, controlling the AGV to travel on the corresponding road section according to the travel control parameter includes:
when detecting that the AGV enters one road section, determining whether a speed corresponding to the road section is consistent with a current speed of the AGV, and if not, controlling the AGV to adjust its speed from the current speed to the speed corresponding to the road section.
when the travel control parameter includes an acceleration, controlling the AGV to travel on the corresponding road section according to the travel control parameter includes:
   when detecting that the AGV enters the corresponding road section, determining whether a speed corresponding to the road section is consistent with a current speed of the AGV, and if not, then controlling the AGV to adjust its speed from the current speed to the speed corresponding to the road section;
   when the travel control parameter includes a positioning accuracy configured with a positioning position and executing an action, controlling the AGV to travel on the corresponding road section according to the travel control parameter includes:
      when detecting that the AGV enters the corresponding road section, detecting a distance between the AGV and the positioning position in real time, and when the distance is less than the positioning accuracy, controlling the AGV to execute a corresponding action.

For each road section on the task path, querying from the AGV route map whether the road section is configured with enabling flags for one or more functions, and if so, controlling the AGV to execute a corresponding function when traveling on the road section.

The functions include: a voice playback function configured with voice content to be played, or/and, an obstacle avoidance detection function configured with an obstacle avoidance detection distance, or/and a start actuator function configured with a start position.

In a possible embodiment of the present application, when the functions include the voice playback function configured with voice content to be played, controlling the AGV to execute a corresponding function when traveling on the road section includes:
when detecting that the AGV enters the road section, controlling the AGV to start playing the configured voice content, and when detecting that the AGV leaves the road section, controlling the AGV to stop playing the voice content;
when the functions include the obstacle avoidance detection function configured with an obstacle avoidance detection distance, controlling the AGV to execute a corresponding function when traveling on the road section includes:
   when detecting that the AGV enters the road section, controlling the AGV to start detecting obstacles within the configured obstacle avoidance detection distance, and when detecting that the AGV leaves the road section, controlling the AGV to stop detecting;
   when the functions include the start actuator function configured with a start position, controlling the AGV to execute a corresponding function when traveling on the road section includes:
      when detecting that the AGV enters the road section, detecting in real time whether the AGV reaches the start position for starting the actuator, and if so, controlling the AGV to start the actuator.

The above embodiment takes into account the actual road conditions of different road sections on the AGV task path, configures travel control parameters for different road sections respectively, and reads the travel control parameters of the road sections in real time during the AGV travel process, so that the AGV can adapt to complex environments, and improve the efficiency of AGV performing tasks.

For steps 101 to 103 in the above embodiment, all of them can be completed by a scheduling server, or all of them can be completed by the AGV, or some of the steps are completed by the scheduling server and some of the steps are completed by the AGV, sspecific embodiments are as follows:

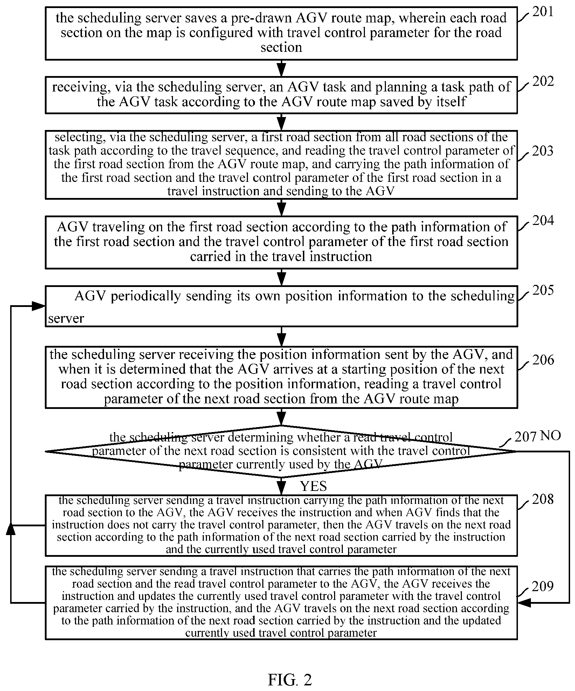

FIG. 2 is a flowchart of an AGV travel control method provided by another embodiment of the present application, and its specific steps are as follows:
Step 201: the scheduling server saves a pre-drawn AGV route map, wherein each road section on the map is configured with travel control parameter for the road section.

The AGV route map is a route map for the entire travel range of the AGV.

The travel control parameters include: one of the following or any combination thereof: a speed, an acceleration, a positioning accuracy configured with a positioning position and executing an action. The speed includes: one of the maximum speed and the minimum speed or a combination thereof; the acceleration includes: one of the maximum acceleration and the minimum acceleration or a combination of thereof.

When configuring a travel control parameter, it can be configured on a corresponding road section or on a starting node of the road section.

In addition, for each road section on the AGV route map, if the AGV needs to perform one or more functions when traveling on the road section, the road section is configured with enabling flags of the one or more functions.

The functions include: a voice playback function configured with the voice content to be played, or/and an obstacle avoidance detection function configured with an obstacle avoidance scheme (including obstacle avoidance detection distance), or/and a start actuator function configured with a start position. For example, the start actuator configured with a start position can enable the AGV to start the robotic arm to grab the object ahead after reaching position A; for example, the start actuator configured with a start position can enable the AGV to turn on the flashing light after reaching position B.

Step 202: receiving, via the scheduling server, an AGV task and planning a task path of the AGV task according to the AGV route map saved by itself.

Step 203: selecting, via the scheduling server, a first road section from all road sections of the task path according to the travel sequence, and reading the travel control parameter of the first road section from the AGV route map, and carrying the path information of the first road section and the travel control parameter of the first road section in a travel instruction and sending to the AGV.

In addition, if the scheduling server reads one or more function enabling flags of the first road section from the AGV route map, the function enabling flags are send to the AGV by carried in the travel instruction.

Step 204: AGV traveling on the first road section according to the path information of the first road section and the travel control parameter of the first road section carried in the travel instruction.

In addition, in the case that one or more function enabling flags are carried in the travel instruction, the AGV needs to execute the corresponding function.

Step 205: AGV periodically sending its own position information to the scheduling server.

The AGV periodically sends its own position information to the scheduling server, so that the scheduling server can obtain the position of the AGV and issue the AGV travel instructions according to the position of the AGV.

Step 206: the scheduling server receiving the position information sent by the AGV, and when it is determined that the AGV arrives at a starting position of the next road section according to the position information, the scheduling server reading a travel control parameter of the next road section from the AGV route map.

In addition, if the next road section in the AGV route map is configured with one or more function enabling flags, the scheduling server will read them together.

Step 207: the scheduling server determining whether a read travel control parameter of the next road section is consistent with the travel control parameter currently used by the AGV, if so, go to step 208; otherwise, go to step 209.

The scheduling server can maintain a travel control parameter list for the AGV. When reading a travel control parameter of a road section from the AGV route map, the travel control parameter can be sequentially saved in the travel control parameter list. In this step, the scheduling server can read the travel control parameter currently used by the AGV from the travel control parameter list.

In addition, if the scheduling server reads one or more function enabling flags of the next road section from the AGV route map, the functions corresponding to the function enabling flags of the next road section are also compared with the functions currently being executed by the AGV. Specifically:
1) For any function corresponding to the function enabling flag of the next road section, if the function is the same as a function currently being executed by the AGV, it does not carry any flag of the function in the travel instruction, and after the AGV receives the instruction, it continues to execute the function on the next road section; otherwise, the enabling flag of the function is carried in the travel instruction, and after the AGV receives the instruction, it starts executing the function on the next road section;
2) For any function currently being executed by the AGV, if the function is different from each function corresponding to the function enabling flag of the next road section, the scheduling server will carry a disabling flag of the function in the travel instruction, and after the AGV receives this instruction, it stops executing the function on the next road section.

For example, if functions 1, 2, and 3 are executed in the current road section, and the function flags of the next road section correspond to functions 1 and 4, the travel instruction of the next road section carries the disabling flags of functions 2 and 3, and carries the enabling flag of function 4.

Step 208: the scheduling server sending a travel instruction carrying the path information of the next road section to the AGV, the AGV receives the instruction and when AGV finds that the instruction does not carry the travel control parameter, then the AGV travels on the next road section according to the path information of the next road section carried by the instruction and the currently used travel control parameter, and the process returns to step 205.

The path information is used to indicate the AGV's travel direction on the road section, such as: going straight, turning, etc.

Step 209: the scheduling server sending a travel instruction that carries the path information of the next road section and the read travel control parameter to the AGV, the AGV receives the instruction and updates the currently used travel control parameter with the travel control parameter carried by the instruction, and the AGV travels on the next road section according to the path information of the next road section carried by the instruction and the updated currently used travel control parameter, and the process returns to step 205.

When the scheduling server determines that the AGV has reached the end of the task according to the position information sent by the AGV, it can send a stop instruction to the AGV.

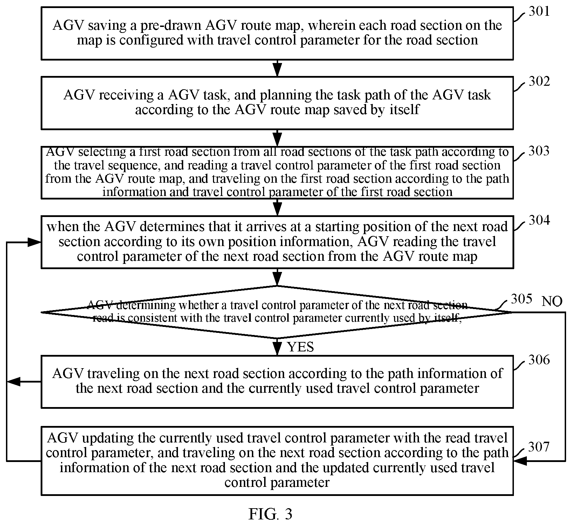

FIG. 3 is a flowchart of an AGV travel control method provided by another embodiment of the present application, and its specific steps are as follows:
Step 301: AGV saving a pre-drawn AGV route map, wherein each road section on the map is configured with travel control parameter for the road section.

The AGV route map is a route map for the entire travel range of the AGV.

The travel control parameters include: one of the following or any combination thereof: a speed, an acceleration, a positioning accuracy configured with a positioning position and executing an action. The speed includes: one of the maximum speed and the minimum speed or a combination thereof; the acceleration includes: one of the maximum acceleration and the minimum acceleration or a combination of thereof.

When configuring the travel control parameters, it can be configured on the corresponding road section or on the starting node of the road section.

In addition, for each road section on the AGV route map, if the AGV needs to perform one or more functions when traveling on the road section, the road section is configured with enabling flags of the one or more functions.

The functions include: a voice playback function configured with voice content to be played, or/and an obstacle avoidance detection function configured with an obstacle avoidance scheme (including obstacle avoidance detection distance), or/and a start actuator function configured with a start position.

Step 302: AGV receiving an AGV task, and planning the task path of the AGV task according to the AGV route map saved by itself.

The AGV task can be sent by the scheduling server.

Step 303: AGV selecting a first road section from all road sections of the task path according to the travel sequence, and reading a travel control parameter of the first road section from the AGV route map, and traveling on the first road section according to the path information and travel control parameter of the first road section.

In addition, if one or more function enabling flags of the first road section are read from the AGV route map, the corresponding function is executed on the first road section.

Step 304: when the AGV determines that it arrives at a starting position of the next road section according to its own position information, AGV reading the travel control parameter of the next road section from the AGV route map.

In addition, if one or more function enabling flags are configured on the next road section in the AGV route map, they will be read together.

Step 305: AGV determining whether a travel control parameter of the next road section read is consistent with the travel control parameter currently used by itself, if so, execute step 306; otherwise, execute step 307.

In addition, if the next road section is configured with one or more function enabling flags, the AGV also needs to compare the functions corresponding to the function enabling flags with the functions currently being executed, specifically:
1) for each function corresponding to each function enabling flag, if the function is the same as a function currently being executed, continue to execute the function on the next road section; otherwise, start to execute the function on the next road section;
2) for each function currently being executed, if the function is not the same as a function corresponding to any function enabling flag, the execution of the function will be stopped on the next road section.

Step 306: AGV traveling on the next road section according to the path information of the next road section and the currently used travel control parameter, and the process returns to step 304.

Step 307: AGV updating the currently used travel control parameter with the read travel control parameter, and traveling on the next road section according to the path information of the next road section and the updated currently used travel control parameter, and the process returns to step 304.

When the AGV determines that it has reached the end of the task according to its own positioning position information, it stops traveling.

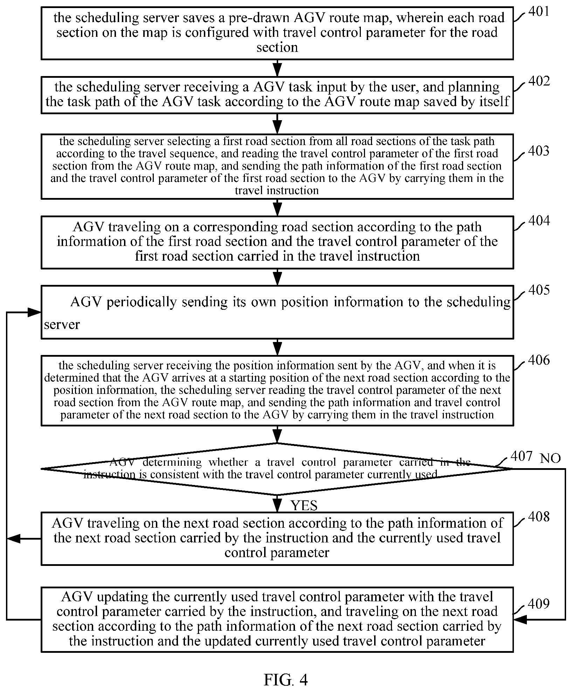

Fig. 4 is the flow chart of the AGV travel control method provided by another embodiment of the present application, and its specific steps are as follows:
Step 401: the scheduling server saves a pre-drawn AGV route map, wherein each road section on the map is configured with travel control parameter for the road section.

The AGV route map is a route map for the entire travel range of the AGV.

The travel control parameters include: one of the following or any combination thereof: a speed, an acceleration, a positioning accuracy configured with a positioning position and executing an action. The speed includes: one of the maximum speed and the minimum speed or a combination thereof; the acceleration includes: one of the maximum acceleration and the minimum acceleration or a combination of thereof.

When configuring the travel control parameters, it can be configured on a corresponding road section or on a starting node of the road section.

In addition, for each road section on the AGV route map, if the AGV needs to execute one or more functions when traveling on the road section, the road section is configured with enabling flag of the one or more functions.

The functions include: a voice playback function configured with the voice content to be played, or/and an obstacle avoidance detection function configured with an obstacle avoidance scheme (including obstacle avoidance detection distance), or/and a start actuator function configured with a start position.

Step 402: the scheduling server receiving an AGV task input by the user, and planning the task path of the AGV task according to the AGV route map saved by itself.

Step 403: the scheduling server selecting a first road section from all road sections of the task path according to the travel sequence, and reading the travel control parameter of the first road section from the AGV route map, and sending the path information of the first road section and the travel control parameter of the first road section to the AGV by carrying them in the travel instruction.

In addition, if the scheduling server reads one or more function enabling flags of the first road section from the AGV route map, it will carry the function enabling flags in the travel instruction and send it to the AGV.

Step 404: AGV traveling on a corresponding road section according to the path information of the first road section and the travel control parameter of the first road section carried in the travel instruction.

In addition, in the case that one or more function enabling flags are carried in the travel instruction, the AGV needs to execute the corresponding function.

Step 405: AGV periodically sending its own position information to the scheduling server.

Step 406: the scheduling server receiving the position information sent by the AGV, and when it is determined that the AGV arrives at a starting position of the next road section according to the position information, the scheduling server reading the travel control parameter of the next road section from the AGV route map, and sending the path information and travel control parameter of the next road section to the AGV by carrying them in the travel instruction.

In addition, if the scheduling server reads one or more function enabling flags of the next road section from the AGV route map, the function enabling flags are carried in the travel instruction and sent to the AGV.

Step 407: AGV receiving the travel instruction, and determining whether a travel control parameter carried in the instruction is consistent with the travel control parameter currently used.

In addition, in the case that one or more function enabling flags are carried in the travel instruction, the AGV also needs to compare the functions corresponding to the function enabling flags in the instruction with the functions currently being executed, specifically:
1) For each function corresponding to the function enabling flags in the instruction, if a function is the same as one function currently being executed, continue to execute the function on the next road section; otherwise, start to execute the function on the next road section;
2) For each function currently being executed, if the function is not the same as any function corresponding to the function enabling flag in the instruction, the execution of the function will be stopped on the next road section.

When the function is to start the actuator, when the AGV is traveling on the road section, it is determined in real time whether the AGV reaches the start position for starting the actuator, and if so, start the actuator.

Step 408 : AGV traveling on the next road section according to the path information of the next road section carried by the instruction and the currently used travel control parameter, and the process returns to step 405 .

Step 409: AGV updating the currently used travel control parameter with the travel control parameter carried by the instruction, and traveling on the next road section according to the path information of the next road section carried by the instruction and the updated currently used travel control parameter, and the process returns to step 405.

When the scheduling server determines that the AGV has reached the end of the task based on the position information sent by the AGV, it will send a stop instruction to the AGV.

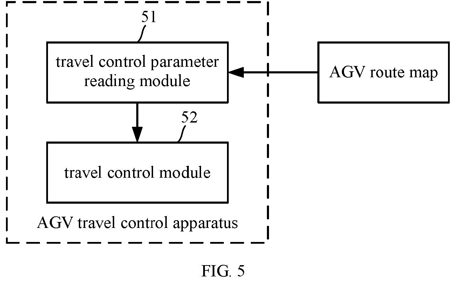

Fig. 5 is a schematic structural diagram of an AGV travel control apparatus provided by an embodiment of the present application, the apparatus is located on a scheduling server or an AGV, and the apparatus mainly includes: a travel control parameter reading module 51 and a travel control module 52, wherein:
the travel control parameter reading module 51 is configured for, when the AGV is traveling on a task path, for each road section on the task path, reading a travel control parameter configured for the road section from an AGV route map, wherein the AGV route map is a route map within a travel range of the AGV, and each road section on the map is configured with a travel control parameter for the road section;
the travel control module 52 is configured for controlling the AGV to travel on a corresponding road section according to the travel control parameter read by the travel control parameter reading module 51.

In a possible embodiment, the travel control module 52 is further configured for: when the travel control parameter includes a speed, controlling the AGV to travel on a corresponding road section according to the travel control parameter, including:
when detecting that the AGV enters the corresponding road section, determining whether a speed corresponding to the road section is consistent with a current speed of the AGV, and if not, then controlling the AGV to adjust its speed from the current speed to the speed corresponding to the road section;
when the travel control parameter includes an acceleration, controlling the AGV to travel on the corresponding road section according to the travel control parameter, including:
   when detecting that the AGV enters the corresponding road section, determining whether an acceleration corresponding to the road section is consistent with a current acceleration of the AGV, if not, controlling the AGV to adjust its acceleration from the current acceleration to the acceleration corresponding to the road section;
   when the travel control parameter includes a positioning accuracy configured with a positioning position and executing an action, controlling the AGV to travel on the corresponding road section according to the travel control parameter includes:
      when detecting that the AGV enters the corresponding road section, detecting a distance between the AGV and the positioning position in real time, and when the distance is less than the positioning accuracy, controlling the AGV to execute a corresponding action.

The travel control module 52 is further configured for querying, for each road section on the task path, from the AGV route map whether the road section is configured with enabling flags for one or more functions, and if so, controlling the AGV to execute a corresponding function when traveling on the road section.

The functions configured for the road section queried by the travel control module 52 including: a voice playback function configured with the voice content to be played, or/and, an obstacle avoidance detection function configured with an obstacle avoidance detection distance, or/and, a start actuator function configured with a start position; and
In a possible embodiment, when the functions include the voice playback function configured with the voice content to be played, controlling the AGV to execute the corresponding function by the travel control module 52 when traveling on the road section includes:
when detecting that the AGV enters the road section, controlling the AGV to start playing the configured voice content, and when detecting that the AGV leaves the road section, controlling the AGV to stop playing the voice content;
when the function includes the obstacle avoidance detection function configured with an obstacle avoidance detection distance, controlling the AGV to execute a corresponding function by the travel control module 52 when traveling on the road section includes:
   when detecting that the AGV enters the road section, controlling the AGV to start detecting obstacles within the configured obstacle avoidance detection distance, and when detecting that the AGV leaves the road section, controlling the AGV to stop detecting;
   when the function includes the start actuator function configured with a start position, controlling the AGV to execute a corresponding function by the travel control module 52 when traveling on the road section includes:
      when detecting that the AGV enters the road section, detecting in real time whether the AGV reaches the start position for starting the actuator, and if so, controlling the AGV to start the actuator.
      In a possible embodiment, the above mentioned apparatus is located on the AGV,
      for each road section on the task path, before the travel control parameter reading module 51 reads a travel control parameter configured for the road section from an AGV route map, further including:
         receiving a task path sent by a scheduling server;
         for each road section on the task path, the travel control parameter reading module 51 reading a travel control parameter configured for the road section from an AGV route map, including:
            periodically reading a travel control parameter configured for a road section where a current position of the AGV is located from the AGV route map according to the current position of the AGV;
            the travel control module 52 controls the AGV to travel on the corresponding road section according to the travel control parameter read by the travel control parameter reading module, including:
               comparing the read travel control parameter with a currently used travel control parameter, if they are inconsistent, updating the currently used travel control parameter with the read travel control parameter, then controlling the AGV to travel on the current road section according to the updated currently used travel control parameter.
               In a possible embodiment, the above mentioned apparatus is located on a scheduling server,
               for each road section on the task path, before the travel control parameter reading module 51 reading a travel control parameter configured for the road section from an AGV route map, further including:
                  receiving an AGV task and planning a task path of the AGV task according to a pre-drawn AGV route map, and sending the task path to the AGV;
                  for each road section on the task path, the travel control parameter reading module 51 reading a travel control parameter configured for the road section from an AGV route map, including:
                     receiving a current position of the AGV periodically sent by the AGV, and reading a travel control parameter configured for a road section where the current position of the AGV is located from the AGV route map according to the current position of the AGV, and sending the travel control parameter to the AGV.

Embodiments of the present application further provide a non-transitory computer-readable storage medium, the non-transitory computer-readable storage medium stores instructions, and when executed by the processor, the instructions cause the processor to perform the AGV travel control method as described in any one of the steps 101-103, or the steps 201-209, or the steps 301-307, or the steps of 401-409.

Embodiments of the present application further provide an electronic device, including the above mentioned non-transitory computer-readable storage medium, and the above mentioned processor that can access the non-transitory computer-readable storage medium.

Embodiments of the present application also provide a computer program product including instructions, which, when running on a computer, enables the computer to execute any of the above mentioned AGV travel control methods.

The beneficial technical effects of the embodiments of the present application are as follows.

The embodiments of the present application takes into account the actual road conditions of different road sections on the AGV task path, configures travel control parameters for different road sections, and reads the travel control parameters of the road section in real time during the AGV travel process, so that the AGV can adapt to complex environments, to improve the efficiency of the AGV to perform tasks.

In addition, the embodiments of the present application also take into account the different functional requirements of different road sections on the AGV task path, configure corresponding functions for the corresponding road sections, and read the function of the road section configuration in real time during the AGV travel process, which further improves the adaptability of the AGV.

In this application, the technical features in each optional solution can be combined to form solutions as long as they are not contradictory, and these solutions are all within the scope disclosed in this application. Relational terms such as first and second, etc. are only used to distinguish one entity or operation from another and do not necessarily require or imply any such actual relationship between these entities or operations or order. Moreover, the terms "including", "comprising" or any other variation thereof are intended to encompass non-exclusive inclusion such that a process, method, article or device comprising a list of elements includes not only those elements, but also includes not explicitly listed or other elements inherent to such a process, method, article or apparatus. Without further limitation, an element qualified by the phrase "including a..." does not preclude the presence of additional identical elements in a process, method, article or apparatus that includes the elements.

## Claims

1. A method for controlling travel of an automated guided vehicle AGV, the method comprising:
when the AGV is traveling on a task path, for each road section on the task path, reading, via a scheduling device, a travel control parameter configured for the road section from an AGV route map (102);
controlling, via the scheduling device, the AGV to travel on a corresponding road section according to the read travel control parameter (103);
wherein the AGV route map is a route map within a travel range of the AGV, and each road section on the map is configured with a travel control parameter for the road section;
**characterized in**
**that** after reading the travel control parameter configured for the road section from the AGV route map, the method further comprises:
for each road section on the task path, querying, via the scheduling device, from the AGV route map whether the road section is configured with enabling flags for one or more functions, and if so, controlling the AGV to execute the one or more functions when traveling on the road section, wherein the functions comprise: a voice playback function configured with voice content to be played, or/and, an obstacle avoidance detection function configured with an obstacle avoidance detection distance.

2. The method according to claim 1, wherein the travel control parameter comprises one of the following or any combination thereof: a speed, an acceleration, a positioning accuracy configured with a positioning position and executing an action;
when the travel control parameter comprises a speed, controlling the AGV to travel on a corresponding road section according to the travel control parameter comprises:
when detecting that the AGV enters the corresponding road section, determining, via the scheduling device, whether a speed corresponding to the road section is consistent with a current speed of the AGV, and if not, then controlling the AGV to adjust its speed from the current speed to the speed corresponding to the road section;
when the travel control parameter comprises an acceleration, controlling the AGV to travel on the corresponding road section according to the travel control parameter comprises:
when detecting that the AGV enters the corresponding road section, determining, via the scheduling device, whether an acceleration corresponding to the road section is consistent with a current acceleration of the AGV, and if not, then controlling the AGV to adjust its acceleration from the current acceleration to the acceleration corresponding to the road section;
when the travel control parameter comprises a positioning accuracy configured with a positioning position and executing an action, controlling the AGV to travel on the corresponding road section according to the travel control parameter comprises:
when detecting that the AGV enters the corresponding road section, detecting, via the scheduling device, a distance between the AGV and the positioning position in real time, and when the distance is less than the positioning accuracy, controlling the AGV to execute a corresponding action.

3. The method according to claim 1, wherein the functions further comprise: a start actuator function configured with a start position;
when the functions comprise the voice playback function configured with voice content to be played, controlling the AGV to execute a corresponding function when traveling on the road section comprises:
when detecting that the AGV enters the road section, controlling, via the scheduling device, the AGV to start playing the configured voice content, and when detecting that the AGV leaves the road section, controlling the AGV to stop playing the voice content;
when the functions comprise the obstacle avoidance detection function configured with an obstacle avoidance detection distance, controlling the AGV to execute a corresponding function when traveling on the road section comprises:
when detecting that the AGV enters the road section, controlling, via the scheduling device, the AGV to start detecting obstacles within the configured obstacle avoidance detection distance, and when detecting that the AGV leaves the road section, controlling the AGV to stop detecting;
when the functions comprise the start actuator function configured with a start position, controlling the AGV to execute a corresponding function when traveling on the road section comprises:
when detecting that the AGV enters the road section, detecting in real time, via the scheduling device, whether the AGV reaches the start position for starting the actuator, and if so, controlling the AGV to start the actuator.

4. The method according to claim 1, wherein the scheduling device is located on the AGV,
when the AGV is traveling on a task path, for each road section on the task path, before reading, via the scheduling device, a travel control parameter configured for the road section from the AGV route map, the method further comprises:
receiving, via the scheduling device, the task path sent by a scheduling server;
wherein reading, via the scheduling device, the travel control parameter configured for the road section from the AGV route map for each road section on the task path, comprises:
periodically reading, via the scheduling device, a travel control parameter configured for a road section where a current position of the AGV is located from the AGV route map according to the current position of the AGV;
wherein controlling, via the scheduling device, on the basis of the read travel control parameter, the AGV to travel on a corresponding road section according to the travel control parameter, comprises:
comparing, via the scheduling device, the read travel control parameter with a currently used travel control parameter, if they are inconsistent, updating the currently used travel control parameter with the read travel control parameter, then controlling the AGV to travel on the current road section according to the updated currently used travel control parameter.

5. The method according to claim 1, wherein the scheduling device is located on the scheduling server,
when the AGV is traveling on a task path, for each road section on the task path, before reading, via the scheduling device, a travel control parameter configured for the road section from an AGV route map, the method further comprises:
receiving, via the scheduling device, an AGV task and planning the task path of the AGV task according to a pre-drawn AGV route map, and sending the task path to the AGV;
wherein reading, via the scheduling device, a travel control parameter configured for the road section from an AGV route map for each road section on the task path, comprises:
receiving, via the scheduling device, a current position of the AGV periodically sent by the AGV, and reading a travel control parameter configured for a road section where the current position of the AGV is located from the AGV route map according to the current position of the AGV, and sending the travel control parameter to the AGV.

6. An apparatus for controlling travel of an automated guided vehicle AGV, the apparatus comprises:
a travel control parameter reading module (51), configured for, when the AGV is traveling on a task path, for each road section on the task path, reading a travel control parameter configured for the road section from an AGV route map, wherein the AGV route map is a route map within a travel range of the AGV, and each road section on the map is configured with a travel control parameter for the road section;
a travel control module (52), configured for controlling the AGV to travel on a corresponding road section according to the travel control parameter read by the travel control parameter reading module (51);
**characterized in**
**that** the travel control module (52) is further configured for querying, for each road section on the task path, from the AGV route map whether the road section is configured with enabling flags for one or more functions, and if so, controlling the AGV to execute the one or more functions when traveling on the road section, wherein the functions configured for the road section queried by the travel control module (52) comprise: a voice playback function configured with voice content to be played, or/and, an obstacle avoidance detection function configured with an obstacle avoidance detection distance.

7. The apparatus of claim 6, wherein the travel control module (52) is further configured for:
when the travel control parameter comprises a speed, controlling the AGV to travel on a corresponding road section according to the travel control parameter, comprises:
when detecting that the AGV enters the corresponding road section, determining whether a speed corresponding to the road section is consistent with a current speed of the AGV, and if not, then controlling the AGV to adjust its speed from the current speed to the speed corresponding to the road section;
when the travel control parameter comprises an acceleration, controlling the AGV to travel on the corresponding road section according to the travel control parameter, comprises:
when detecting that the AGV enters the corresponding road section, determining whether an acceleration corresponding to the road section is consistent with a current acceleration of the AGV, if not, then controlling the AGV to adjust its acceleration from the current acceleration to the acceleration corresponding to the road section;
when the travel control parameter comprises a positioning accuracy configured with a positioning position and executing an action, controlling the AGV to travel on the corresponding road section according to the travel control parameter comprises:
when detecting that the AGV enters the corresponding road section, detecting a distance between the AGV and the positioning position in real time, and when the distance is less than the positioning accuracy, controlling the AGV to execute a corresponding action.

8. The apparatus according to claim 6, wherein the functions configured for the road section queried by the travel control module (52) further comprise: a start actuator function configured with a start position;
when the functions comprise the voice playback function configured with voice content to be played, controlling the AGV to execute a corresponding function by the travel control module (52) when traveling on the road section comprises:
when detecting that the AGV enters the road section, controlling the AGV to start playing the configured voice content, and when detecting that the AGV leaves the road section, controlling the AGV to stop playing the voice content;
when the functions comprise the obstacle avoidance detection function configured with an obstacle avoidance detection distance, controlling the AGV to execute a corresponding function by the travel control module (52) when traveling on the road section comprises:
when detecting that the AGV enters the road section, controlling the AGV to start detecting obstacles within the configured obstacle avoidance detection distance, and when detecting that the AGV leaves the road section, controlling the AGV to stop detecting;
when the functions comprise the start actuator function configured with a start position, controlling the AGV to execute a corresponding function by the travel control module (52) when traveling on the road section comprises:
when detecting that the AGV enters the road section, detecting in real time whether the AGV reaches the start position for starting the actuator, and if so, controlling the AGV to start the actuator.

9. The apparatus of claim 6, wherein the apparatus is located on the AGV,
for each road section on the task path, before the travel control parameter reading module (51) reading a travel control parameter configured for the road section from an AGV route map, further comprises:
receiving a task path sent by a scheduling server;
for each road section on the task path, the travel control parameter reading module (51) reading a travel control parameter configured for the road section from an AGV route map, comprises:
periodically reading a travel control parameter configured for a road section where a current position of the AGV is located from the AGV route map according to the current position of the AGV;
the travel control module (52) controlling the AGV to travel on the corresponding road section according to the travel control parameter read by the travel control parameter reading module (51), comprises:
comparing the read travel control parameter with a currently used travel control parameter, if they are inconsistent, updating the currently used travel control parameter with the read travel control parameter, then controlling the AGV to travel on the current road section according to the updated currently used travel control parameter.

10. The apparatus of claim 6, wherein the device is located on a scheduling server,
for each road section on the task path, before the travel control parameter reading module (51) reading a travel control parameter configured for the road section from an AGV route map, further comprises:
receiving an AGV task and planning a task path of the AGV task according to a pre-drawn AGV route map, and sending the task path to the AGV;
for each road section on the task path, the travel control parameter reading module (51) reading a travel control parameter configured for the road section from an AGV route map, comprises:
receiving a current position of the AGV periodically sent by the AGV, and reading a travel control parameter configured for a road section where the current position of the AGV is located from the AGV route map according to the current position of the AGV, and sending the travel control parameter to the AGV.

11. An electronic device, comprising a processor and a memory;
the memory is configured for storing a computer program;
the processor is configured to implement the method of any one of claims 1-5 when executing the program stored in the memory.

12. A computer-readable storage medium, wherein a computer program is stored in the computer-readable storage medium, and when the computer program is executed by a processor, the method steps of any one of claims 1-5 are implemented.

## Patentansprüche

1. Ein Verfahren zum Steuern der Fahrt eines fahrerlosen Transportfahrzeugs (AGV), wobei das Verfahren umfasst:
wenn sich das AGV entlang eines Auftragsfahrwegs fährt, für jeden Straßenabschnitt auf dem Auftragsfahrweg mittels einer Steuereinrichtung einen für den Straßenabschnitt konfigurierten Fahrsteuerungsparameters aus einer AGV-Routenkarte (102) auszulesen;
mittels der Steuereinrichtung das AGV zu steuern, um den entsprechenden Straßenabschnitt entsprechend dem ausgelesenen Fahrsteuerungsparameter zu befahren (103);
wobei die AGV-Routenkarte eine Routenkarte innerhalb eines Fahrbereichs des AGV ist und jeder Straßenabschnitt auf der Karte mit einem Fahrsteuerungsparameter für den Straßenabschnitt versehen ist;
**dadurch gekennzeichnet,**
**dass** das Verfahren nach dem Auslesen des für den Straßenabschnitt konfigurierten Fahrsteuerungsparameters aus der AGV-Routenkarte ferner umfasst:
für jeden Straßenabschnitt des Auftragsfahrweg mittels der Steuereinrichtung aus der AGV-Routenkarte abzufragen, ob der Straßenabschnitt mit Aktivierungskennzeichen für eine oder mehrere Funktionen versehen ist, und, falls dies der Fall ist, das AGV so zu steuern, dass es die eine oder mehreren Funktionen ausführt, während es den Straßenabschnitt befährt, wobei die Funktionen umfassen: eine Sprachwiedergabefunktion, die mit abzuspielenden Sprachinhalten versehen ist, und/oder eine Hindernisvermeidungserkennungsfunktion, die mit einem Hindernisvermeidungserkennungsabstand versehen ist.

2. Das Verfahren nach Anspruch 1, wobei der Fahrsteuerungsparameter einen der folgenden Parameter oder eine beliebige Kombination davon umfasst: eine Geschwindigkeit, eine Beschleunigung, eine Positionierungsgenauigkeit, die durch eine Position und eine auszuführende Aktion definiert ist;
wenn der Fahrsteuerungsparameter eine Geschwindigkeit umfasst, umfasst das Steuern des AGV, auf einem entsprechenden Straßenabschnitt gemäß dem Fahrsteuerungsparameter zu fahren:
bei Feststellung, dass das AGV in den entsprechenden Straßenabschnitt einfährt, mittels der Steuereinrichtung zu ermitteln, ob eine dem Straßenabschnitt entsprechende Geschwindigkeit mit der aktuellen Geschwindigkeit des AGV übereinstimmt, und, falls dies nicht der Fall ist, das AGV so zu steuern, dass es seine Geschwindigkeit von der aktuellen Geschwindigkeit auf die dem Straßenabschnitt entsprechende Geschwindigkeit anpasst;
wenn der Fahrsteuerungsparameter eine Beschleunigung umfasst, das AGV so zu steuern, dass es auf dem entsprechenden Straßenabschnitt gemäß dem Fahrsteuerungsparameterr fährt, umfasst:
bei Feststellung, dass das AGV in den entsprechenden Straßenabschnitt einfährt, mittels der Steuereinrichtung zu ermitteln, ob eine dem Straßenabschnitt entsprechende Beschleunigung mit der aktuellen Beschleunigung des AGV übereinstimmt, und, falls dies nicht der Fall ist, das AGV so zu steuern, dass es seine Beschleunigung von der aktuellen Beschleunigung auf die dem Straßenabschnitt entsprechende Beschleunigung anpasst;
wenn der Fahrsteuerungsparameter eine Positionierungsgenauigkeit umfasst, die durch eine Position und eine auszuführende Aktion definiert ist, umfasst die Steuerung des AGV, auf dem entsprechenden Straßenabschnitt gemäß dem Fahrsteuerungsparameter zu fahren:
wenn festgestellt wird, dass das AGV in den entsprechenden Straßenabschnitt einfährt, wird mittels der Steuereinrichtung in Echtzeit ein Abstand zwischen dem AGV und der Positionierungsposition ermittelt, und wenn der Abstand kleiner ist als die Positionierungsgenauigkeit, wird das AGV so gesteuert, dass es eine entsprechende Aktion ausführt.

3. Das Verfahren nach Anspruch 1, wobei die Funktionen ferner umfassen: eine StartAktuatorfunktion, die mit einer Startposition konfiguriert ist;
wenn die Funktionen die Sprachwiedergabefunktion umfassen, die mit abzuspielenden Sprachinhalten konfiguriert ist, das Steuern des AGV, um eine entsprechende Funktion auszuführen, während es auf dem Straßenabschnitt fährt, umfasst:
wenn erkannt wird, dass das AGV in den Straßenabschnitt einfährt, wird das AGV mittels der Steuereinrichtung so gesteuert, dass es mit der Wiedergabe des konfigurierten Sprachinhalts beginnt, und wenn erkannt wird, dass das AGV den Straßenabschnitt verlässt, wird das AGV so gesteuert, dass es die Wiedergabe des Sprachinhalts beendet;
wenn die Funktionen die Hindernisvermeidungserkennungsfunktion umfassen, die mit einem Hindernisvermeidungserkennungsabstand konfiguriert ist, umfasst die Steuerung des AGV zur Ausführung einer entsprechenden Funktion beim Befahren des Straßenabschnitts:
wenn erkannt wird, dass das AGV in den Straßenabschnitt einfährt, wird das AGV mittels der Steuereinrichtung so gesteuert, dass es mit der Erkennung von Hindernissen innerhalb des konfigurierten Hindernisvermeidungserkennungsabstand beginnt, und wenn festgestellt wird, dass das AGV den Straßenabschnitt verlässt, wird das AGV so gesteuert, dass es die Erkennung beendet;
wenn die Funktionen die Startaktuatorfunktion umfassen, die mit einer Startposition konfiguriert ist, wird das AGV so gesteuert, dass es beim Befahren des Straßenabschnitts eine entsprechende Funktion ausführt, und zwar:
wenn erkannt wird, dass das AGV in den Straßenabschnitt einfährt, wird mittels der Steuereinrichtung in Echtzeit ermittelt, ob das AGV die Startposition zum Starten des Aktuators erreicht, und falls ja, wird das AGV so gesteuert, dass es den Aktuator startet.

4. Das Verfahren nach Anspruch 1, wobei sich die Steuereinrichtung auf dem AGV befindet,
wenn sich das AGV auf einem Auftragsfahrweg bewegt, für jeden Straßenabschnitt auf dem Auftragsfahrweg, vor dem Auslesen eines für den jeweiligen Straßenabschnitt in der AGV-Routenkarte konfigurierten Fahrsteuerungsparameters mittels der Steuereinrichtung das Verfahren ferner umfasst:
das Empfangen des von einem Steuerserver gesendeten Auftragsfahrweg mittels der Steuereinrichtung;
wobei das Auslesen des für den Straßenabschnitt konfigurierten Fahrsteuerungsparameters aus der AGV-Routenkarte für jeden Straßenabschnitt des Auftragsfahrwegs mittels der Steuereinrichtung Folgendes umfasst:
periodische Auslesen eines für einen Straßenabschnitt, auf dem sich die aktuelle Position des AGV befindet, konfigurierten Fahrsteuerungsparameters aus der AGV-Routenkarte mittels der Steuereinrichtung entsprechend der aktuellen Position des AGV;
wobei das Steuern des AGV über die Steuereinrichtung auf der Grundlage des ausgelesenen Fahrsteuerungsparameters, damit das AGV auf einem entsprechenden Straßenabschnitt gemäß dem Fahrsteuerungsparameter fährt, Folgendes umfasst:
das Vergleichen des ausgelesenen Fahrsteuerungsparameters über die Steuereinrichtung mit einem aktuell verwendeten Fahrsteuerungsparameter; falls diese nicht übereinstimmen, das Aktualisieren des aktuell verwendeten Fahrsteuerungsparameters mit dem ausgelesenen Fahrsteuerungsparameter; anschließend das Steuern des AGV, auf dem aktuellen Straßenabschnitt gemäß dem aktualisierten, aktuell verwendeten Fahrsteuerungsparameter zu fahren.

5. Das Verfahren nach Anspruch 1, wobei sich die Steuereinrichtung auf dem Steuerserver befindet,
wenn sich das AGV entlang eines Auftragsfahrweg befindet, umfasst das Verfahren für jeden Straßenabschnitt auf dem Auftragsfahrweg, bevor mittels der Steuereinrichtung ein für den Straßenabschnitt konfigurierter Fahrsteuerungsparameter aus einer AGV-Routenkarte ausgelesen wird, ferner:
das Empfangen einer AGV-Aufgabe über die Steuereinrichtung und das Planen des Auftragsfahrweg der AGV-Aufgabe gemäß einer vorab erstellten AGV-Routenkarte sowie das Senden der Auftragsfahrweg an das AGV;
wobei das Auslesen eines für den Straßenabschnitt konfigurierten Fahrsteuerungsparameters aus einer AGV-Routenkarte für jeden Straßenabschnitt auf dem Auftragsfahrweg über die Steuereinrichtung Folgendes umfasst:
empfangen einer vom AGV zyklisch gesendeten aktuellen Position des AGV mittels der Steuereinrichtung, Auslesen eines für den Straßenabschnitt, in dem sich die aktuelle Position des AGV befindet, konfigurierten Fahrsteuerungsparameters aus der AGV-Routenkarte in Abhängigkeit von der aktuellen Position des AGV sowie Senden des Fahrsteuerungsparameters an das AGV.

6. Eine Vorrichtung zum Steuern der Fahrt eines fahrerlosen Transportfahrzeugs (AGV), wobei die Vorrichtung umfasst:
ein Fahrsteuerungsparameter-Auslesemodul (51), das so konfiguriert ist, dass es, wenn sich das AGV auf einem Auftragsfahrweg bewegt, für jeden Straßenabschnitt auf dem Auftragsfahrweg einen für den Straßenabschnitt konfigurierten Fahrsteuerungsparameter aus einer AGV-Routenkarte ausliest, wobei die AGV-Routenkarte eine Routenkarte innerhalb eines Fahrbereichs des AGV ist und jeder Straßenabschnitt auf der Karte mit einem Fahrsteuerungsparameter für den Straßenabschnitt versehen ist;
ein Fahrsteuerungsmodul (52), das so konfiguriert ist, dass es das AGV so steuert, dass es auf einem entsprechenden Straßenabschnitt gemäß dem Fahrsteuerungsparameter-Auslesemodul (51) ausgelesenen Fahrsteuerungsparameter;
**gekennzeichnet durch**
dass das Fahrsteuerungsmodul (52) ferner so konfiguriert ist, dass es für jeden Straßenabschnitt des Auftragsfahrwegs aus der AGV-Routenkarte abfragt, ob der Straßenabschnitt mit Aktivierungskennzeichen für eine oder mehrere Funktionen konfiguriert ist, und, falls ja, das AGV so steuert, dass es die eine oder mehreren Funktionen ausführt, wenn es auf dem Straßenabschnitt fährt, wobei die für den vom Fahrsteuerungsmodul (52) abgefragten Straßenabschnitt konfigurierten Funktionen Folgendes umfassen: eine Sprachwiedergabefunktion, die mit abzuspielenden Sprachinhalten versehen ist, und/oder eine Hindernisvermeidungserkennungsfunktion, die mit einem Hindernisvermeidungserkennungsabstand konfiguriert ist.

7. Die Vorrichtung nach Anspruch 6, wobei das Fahrsteuerungsmodul (52) ferner dafür ausgelegt ist:
wenn der Fahrsteuerungsparameter eine Geschwindigkeit umfasst, das AGV so zu steuern, dass es auf einem entsprechenden Straßenabschnitt gemäß dem Fahrsteuerungsparameter fährt, was umfasst:
bei Erkennung, dass das AGV in den entsprechenden Straßenabschnitt einfährt, zu ermitteln, ob eine dem Straßenabschnitt entsprechende Geschwindigkeit mit einer aktuellen Geschwindigkeit des AGV übereinstimmt, und, falls nicht, das AGV so zu steuern, dass es seine Geschwindigkeit von der aktuellen Geschwindigkeit auf die dem Straßenabschnitt entsprechende Geschwindigkeit anpasst;
wenn der Fahrsteuerungsparameter eine Beschleunigung umfasst, das AGV so zu steuern, dass es auf dem entsprechenden Straßenabschnitt gemäß dem Fahrsteuerungsparameter fährt, umfasst:
bei Feststellung, dass das AGV in den entsprechenden Straßenabschnitt einfährt, zu ermitteln, ob eine dem Straßenabschnitt entsprechende Beschleunigung mit der aktuellen Beschleunigung des AGV übereinstimmt, und, falls dies nicht der Fall ist, das AGV so zu steuern, dass es seine Beschleunigung von der aktuellen Beschleunigung auf die dem Straßenabschnitt entsprechende Beschleunigung anpasst;
wenn der Fahrsteuerungsparameter eine Positionierungsgenauigkeit umfasst, die durch eine Position und eine auszuführende Aktion definiert ist, umfasst die Steuerung des AGV, auf dem entsprechenden Straßenabschnitt gemäß dem Fahrsteuerungsparameter zu fahren:
wenn festgestellt wird, dass das AGV in den entsprechenden Straßenabschnitt einfährt, wird in Echtzeit ein Abstand zwischen dem AGV und der Positionierungsposition ermittelt, und wenn der Abstand kleiner ist als die Positionierungsgenauigkeit, das Steuern des AGV, um eine entsprechende Aktion auszuführen.

8. Die Vorrichtung nach Anspruch 6, wobei die für den vom Fahrsteuerungsmodul (52) abgefragten Straßenabschnitt konfigurierten Funktionen ferner Folgendes umfassen: eine StartAktuatorfunktion, die mit einer Startposition konfiguriert ist;
wenn die Funktionen die Sprachwiedergabefunktion umfassen, die mit abzuspielenden Sprachinhalten konfiguriert ist, das Steuern des AGV, durch das Fahrsteuerungsmodul (52) zur Ausführung einer entsprechenden Funktion beim Befahren des Straßenabschnitts umfasst:
bei Erkennung, dass das AGV in den Straßenabschnitt einfährt, das AGV so zu steuern, dass die Wiedergabe des konfigurierten Sprachinhalts gestartet wird, und bei Erkennung, dass das AGV den Straßenabschnitt verlässt, das AGV so zu steuern, dass die Wiedergabe des Sprachinhalts beendet wird;
wenn die Funktionen die Hindernisvermeidungserkennungsfunktion umfassen, die mit einem Hindernisvermeidungserkennungsabstand konfiguriert ist, umfasst die Steuerung des AGV zur Ausführung einer entsprechenden Funktion durch das Fahrsteuerungsmodul (52) während der Fahrt auf dem Straßenabschnitt:
bei Erkennung, dass das AGV in den Straßenabschnitt einfährt, das AGV so zu steuern, dass es mit der Erkennung von Hindernissen innerhalb der konfigurierten Hindernisvermeidungserkennungsabstand beginnt, und bei Erkennung, dass das AGV den Straßenabschnitt verlässt, das AGV so zu steuern, dass es die Erkennung beendet;
wenn die Funktionen die Startaktuatorfunktion umfassen, die mit einer Startposition konfiguriert ist, umfasst die Steuerung des AGV zur Ausführung einer entsprechenden Funktion durch das Fahrsteuerungsmodul (52) beim Befahren des Straßenabschnitts:
wenn erkannt wird, dass das AGV in den Straßenabschnitt einfährt, in Echtzeit zu erfassen, ob das AGV die Startposition zum Starten des Aktuators erreicht, und, falls ja, das AGV so zu steuern, dass es den Aktuator startet.

9. Die Vorrichtung nach Anspruch 6, wobei sich die Vorrichtung am AGV befindet,
für jeden Straßenabschnitt auf dem Auftragsfahrweg, bevor das Fahrsteuerungsparameter-Auslesemodul (51) einen für den Straßenabschnitt konfigurierten Fahrsteuerungsparameter aus einer AGV-Routenkarte ausliest, ferner umfasst:
Empfangen eines von einem Steuerserver gesendeten Auftragsfahrweg;
für jeden Straßenabschnitt auf dem Auftragsfahrweg umfasst das Fahrsteuerungsparameter-Auslesemodul (51), das einen für den Straßenabschnitt konfigurierten Fahrsteuerungsparameter aus einer AGV-Routenkarte ausliest, Folgendes:
das periodische Auslesen eines für einen Straßenabschnitt, in dem sich die aktuelle Position des AGV befindet, konfigurierten Fahrsteuerungsparameters aus der AGV-Routenkarte entsprechend der aktuellen Position des AGV;
das Fahrsteuerungsmodul (52) steuert das AGV so, dass es auf dem entsprechenden Straßenabschnitt gemäß dem Fahrsteuerungsparameter-Auslesemodul (51), ausgelesenen Fahrsteuerungsparameter fährt, und umfasst:
Vergleichen des ausgelesenen Fahrsteuerungsparameters mit einem aktuell verwendeten Fahrsteuerungsparameter; falls diese nicht übereinstimmen, Aktualisieren des aktuell verwendeten Fahrsteuerungsparameters mit dem ausgelesenen Fahrsteuerungsparameter; anschließend Steuern des AGV, damit es auf dem aktuellen Straßenabschnitt gemäß dem aktualisierten, aktuell verwendeten Fahrsteuerungsparameter fährt.

10. Die Vorrichtung nach Anspruch 6, wobei sich die Vorrichtung auf einem Steuerserver befindet,
für jeden Straßenabschnitt auf dem Auftragsfahrweg, bevor das Fahrsteuerungsparameter-Auslesemodul (51) einen für den Straßenabschnitt konfigurierten Fahrsteuerungsparameter aus einer AGV-Routenkarte ausliest, ferner umfasst:
Empfangen einer AGV-Aufgabe und Planen eines Auftragsfahrwegs der AGV-Aufgabe gemäß einer vorab erstellten AGV-Routenkarte sowie Senden des Auftragsfahrwegs an das AGV;
wobei das Fahrsteuerungsparameter-Auslesemodul (51) zum Auslesen von Fahrsteuerungsparametern für jeden Straßenabschnitt auf dem Auftragsfahrweg einen für den Straßenabschnitt konfigurierten Fahrsteuerungsparameter aus einer AGV-Routenkarte ausliest und Folgendes umfasst:
Empfangen einer vom AGV zyklisch übermittelten aktuellen Position des AGV, Auslesen eines für den Straßenabschnitt, in dem sich die aktuelle Position des AGV befindet, konfigurierten Fahrsteuerungsparameters aus der AGV-Routenkarte in Abhängigkeit von der aktuellen Position des AGV sowie Senden des Fahrsteuerungsparameters an das AGV.

11. Ein elektronisches Gerät, umfassend einen Prozessor und einen Speicher;
der Speicher ist zum Speichern eines Computerprogramms ausgelegt;
der Prozessor ist so konfiguriert, dass er bei der Ausführung des im Speicher gespeicherten Programms das Verfahren gemäß einem der Ansprüche 1 bis 5 durchführt.

12. Ein computerlesbares Speichermedium, wobei ein Computerprogramm auf dem computerlesbaren Speichermedium gespeichert ist und bei Ausführung des Computerprogramms durch einen Prozessor die Verfahrensschritte gemäß einem der Ansprüche 1 bis 5 ausgeführt werden.

## Revendications

1. Un procédé de commande du déplacement d'un véhicule à guidage automatique (AGV), le procédé comprenant :
lorsque l'AGV se déplace sur un parcours de la tâche, pour chaque tronçon de route de ce parcours de la tâche, la lecture, via un dispositif de planification, d'un paramètre de commande de déplacement configuré pour le tronçon de route à partir d'une carte d'itinéraire de l'AGV (102) ;
le commande, via le dispositif de planification, de l'AGV afin qu'il se déplace sur un tronçon de route correspondant conformément au paramètre de commande de déplacement lu (103) ;
dans lequel la carte d'itinéraire de l'AGV est une carte d'itinéraire située dans une zone de déplacement de l'AGV, et chaque tronçon de route figurant sur la carte est associé à un paramètre de commande de déplacement pour ce tronçon de route ;
**caractérisé en ce que**
le fait qu'après avoir lu le paramètre de commande de déplacement configuré pour le tronçon de route à partir de la carte d'itinéraire de l'AGV, le procédé comprend en outre :
pour chaque tronçon de route du parcours de la tâche, interroger, via le dispositif de planification, la carte d'itinéraire de l'AGV afin de déterminer si le tronçon de route est configuré avec des indicateurs d'activation pour une ou plusieurs fonctions, et si tel est le cas, commander l'AGV pour qu'il exécute la ou les fonctions lors de son déplacement sur le tronçon de route, les fonctions comprenant : une fonction de lecture vocale configurée avec un contenu vocal à lire, et/ou une fonction de détection d'évitement d'obstacles configurée avec une distance de détection d'évitement d'obstacles.

2. Le procédé selon la revendication 1, dans lequel le paramètre de commande de déplacement comprend l'un des éléments suivants ou toute combinaison de ceux-ci : une vitesse, une accélération, une précision de positionnement configurée avec une position de localisation et l'exécution d'une action ;
lorsque le paramètre de commande de déplacement comprend une vitesse, le fait de commander l'AGV pour qu'il se déplace sur un tronçon de route correspondant conformément au paramètre de commande de déplacement comprend :
lorsqu'il est détecté que l'AGV pénètre dans le tronçon de route correspondant, déterminer, via le dispositif de planification, si une vitesse correspondant à ce tronçon de route est compatible avec la vitesse actuelle de l'AGV, et si ce n'est pas le cas, commander l'AGV pour qu'il ajuste sa vitesse, en passant de la vitesse actuelle à la vitesse correspondant au tronçon de route ;
lorsque le paramètre de commande de déplacement comprend une accélération, commander l'AGV pour qu'il se déplace à une accélération e sur le tronçon de route correspondant conformément au paramètre de commande de déplacement, ce qui comprend :
lorsqu'il est détecté que l'AGV pénètre sur le tronçon de route correspondant, déterminer, via le dispositif de planification, si une accélération correspondant au tronçon de route est cohérente avec l'accélération actuelle de l'AGV, et si ce n'est pas le cas, commander l'AGV pour qu'il ajuste son accélération de l'accélération actuelle à l'accélération correspondant au tronçon de route ;
lorsque le paramètre de commande de déplacement comprend une précision de positionnement configurée avec une position de positionnement et l'exécution d'une action, le fait de commander l'AGV de se déplacer sur le tronçon de route correspondant conformément au paramètre de commande de déplacement comprend :
lorsqu'il est détecté que l'AGV pénètre dans le tronçon de route correspondant, détecter, via le dispositif de planification, en temps réel une distance entre l'AGV et la position de positionnement, et lorsque cette distance est inférieure à la précision de positionnement, commander l'AGV pour qu'il exécute une action correspondante.

3. Le procédé selon la revendication 1, dans lequel les fonctions comprennent en outre : une fonction d'actionneur de démarrage configurée avec une position de démarrage ;
lorsque les fonctions comprennent la fonction de lecture vocale configurée avec un contenu vocal à lire, le fait de commander à l'AGV pour qu'il exécute une fonction correspondante lors de son déplacement sur le tronçon de route comprend :
lorsqu'il est détecté que l'AGV pénètre dans le tronçon de route, commander, via le dispositif de planification, l'AGV pour qu'il commence la lecture du contenu vocal configuré, et lorsqu'il est détecté que l'AGV quitte le tronçon de route, commander l'AGV pour qu'il arrête la lecture du contenu vocal ;
lorsque les fonctions comprennent la fonction de détection d'évitement d'obstacles configurée avec une distance de détection d'évitement d'obstacles, le fait de commander l'AGV pour qu'il exécute une fonction correspondante lors de son déplacement sur le tronçon de route comprend :
lorsqu'il est détecté que l'AGV pénètre dans le tronçon de route, commander, via le dispositif de planification, l'AGV pour qu'il commence à détecter les obstacles dans la distance de détection d'évitement d'obstacles configurée, et lorsqu'il est détecté que l'AGV quitte le tronçon de route, commander l'AGV pour qu'il cesse la détection ;
lorsque les fonctions comprennent la fonction d'actionneur de démarrage configurée avec une position de démarrage, commander l'AGV pour qu'il exécute une fonction correspondante lors de son déplacement sur le tronçon de route, ce qui comprend :
lorsqu'il est détecté que l'AGV pénètre dans le tronçon de route, détecter en temps réel, via le dispositif de planification, si l'AGV atteint la position de démarrage pour démarrer l'actionneur, et si tel est le cas, commander l'AGV pour qu'il démarre l'actionneur.

4. Le procédé selon la revendication 1, dans lequel le dispositif de planification est situé sur l'AGV,
lorsque l'AGV se déplace sur un parcours de la tâche, pour chaque tronçon de route du parcours de la tâche, avant de lire, via le dispositif de planification, un paramètre de commande de déplacement configuré pour le tronçon de route à partir de la carte d'itinéraire de l'AGV, le procédé comprend en outre :
la réception, via le dispositif de planification, du parcours de la tâche envoyé par un serveur de planification ;
dans lequel la lecture, via le dispositif de planification, du paramètre de commande de déplacement configuré pour le tronçon de route à partir de la carte d'itinéraire de l'AGV pour chaque tronçon de route du parcours de la tâche, comprend :
la lecture périodique, via le dispositif de planification, d'un paramètre de commande de déplacement configuré pour un tronçon de route où se trouve la position actuelle de l'AGV, à partir de la carte d'itinéraire de l'AGV, en fonction de la position actuelle de l'AGV ;
dans lequel le fait de commander, via le dispositif de planification, sur la base du paramètre de commande de déplacement lu, à l'AGV de se déplacer sur un tronçon de route correspondant conformément au paramètre de commande de déplacement, comprend :
la comparaison, via le dispositif de planification, le paramètre de commande de déplacement lu avec un paramètre de commande de déplacement actuellement utilisé ; si ceux-ci sont incohérents, la mise à jour du paramètre de commande de déplacement actuellement utilisé avec le paramètre de commande de déplacement lu, puis commander à l'AGV de se déplacer sur le tronçon de route actuel conformément au paramètre de commande de déplacement actuellement utilisé mis à jour.

5. Le procédé selon la revendication 1, dans lequel le dispositif de planification est situé sur le serveur de planification,
lorsque l'AGV se déplace sur un parcours de la tâche, pour chaque tronçon de route de ce parcours, avant de lire, via le dispositif de planification, un paramètre de commande de déplacement configuré pour le tronçon de route à partir d'une carte d'itinéraire de l'AGV, le procédé comprend en outre :
la réception, via le dispositif de planification, d'une tâche de l'AGV et la planification du parcours de cette tâche selon une carte d'itinéraire de l'AGV préétablie, ainsi que l'envoi du parcours à l'AGV ;
dans lequel la lecture, via le dispositif de planification, d'un paramètre de commande de déplacement configuré pour le tronçon de route à partir d'une carte d'itinéraire de l'AGV pour chaque tronçon de route du parcours de la tâche, comprend :
la réception, via le dispositif de planification, d'une position actuelle de l'AGV envoyée périodiquement par celui-ci, et la lecture, à partir de la carte d'itinéraire de l'AGV, d'un paramètre de commande de déplacement configuré pour un tronçon de route où se trouve la position actuelle de l'AGV, en fonction de la position actuelle de l'AGV, ainsi que l'envoi dudit paramètre de commande de déplacement à l'AGV.

6. Un appareil de commande du déplacement d'un véhicule à guidage automatique (AGV), le appareil comprenant :
un module de lecture de paramètres de commande de déplacement (51), configuré pour, lorsque l'AGV se déplace sur un parcours de la tâche, lire, pour chaque tronçon de route du parcours de la tâche, un paramètre de commande de déplacement configuré pour ce tronçon de route à partir d'une carte d'itinéraire de l'AGV, dans lequel la carte d'itinéraire de l'AGV est une carte d'itinéraire située dans une zone de déplacement de l'AGV, et chaque tronçon de route sur la carte est configuré avec un paramètre de commande de déplacement pour ce tronçon de route ;
un module de commande de déplacement (52), configuré pour commander l'AGV afin qu'il se déplace sur un tronçon de route correspondant conformément au paramètre de commande de déplacement lu par le module de lecture des paramètres de commande de déplacement (51) ;
**caractérisé en ce que**
**en ce que** le module de commande de déplacement (52) est en outre configuré pour interroger, pour chaque tronçon de route situé sur le parcours de la tâche, la carte d'itinéraire de l'AGV afin de déterminer si ce tronçon de route est configuré avec des indicateurs d'activation pour une ou plusieurs fonctions, et, le cas échéant, pour commander l'AGV afin qu'il exécute la ou les fonctions lors de son déplacement sur ce tronçon de route, les fonctions configurées pour le tronçon de route interrogé par le module de commande de déplacement (52) comprenant : une fonction de lecture vocale configurée avec un contenu vocal à lire, et/ou une fonction de détection d'évitement d'obstacles configurée avec une distance de détection d'évitement d'obstacles.

7. L'appareil selon la revendication 6, dans lequel le module de commande de déplacement (52) est en outre configuré pour :
lorsque le paramètre de commande de déplacement comprend une vitesse, commander l'AGV pour qu'il se déplace sur un tronçon de route correspondant conformément au paramètre de commande de déplacement, ce qui comprend :
lorsqu'il détecte que l'AGV pénètre sur le tronçon de route correspondant, déterminer si une vitesse correspondant au tronçon de route est compatible avec la vitesse actuelle de l'AGV, et si ce n'est pas le cas, commander l'AGV pour qu'il ajuste sa vitesse de la vitesse actuelle à la vitesse correspondant au tronçon de route ;
lorsque le paramètre de commande de déplacement comprend une accélération, commander l'AGV de se déplacer sur le tronçon de route correspondant conformément au paramètre de commande de déplacement, ce qui comprend :
lorsqu'il est détecté que l'AGV pénètre dans le tronçon de route correspondant, déterminer si une accélération correspondant à ce tronçon de route est cohérente avec l'accélération actuelle de l'AGV; si ce n'est pas le cas, commander l'AGV pour qu'il ajuste son accélération de l'accélération actuelle à l'accélération correspondant au tronçon de route ;
lorsque le paramètre de commande de déplacement comprend une précision de positionnement configurée avec une position de positionnement et l'exécution d'une action, le fait de commander l'AGV pour qu'il se déplace sur le tronçon de route correspondant conformément au paramètre de commande de déplacement comprend :
lorsqu'il est détecté que l'AGV pénètre dans le tronçon de route correspondant, détecter en temps réel une distance entre l'AGV et la position de repérage, et lorsque cette distance est inférieure à la précision de positionnement, commander l'AGV pour qu'il exécute une action correspondante.

8. L'appareil selon la revendication 6, dans lequel les fonctions configurées pour le tronçon de route interrogé par le module de commande de déplacement (52) comprennent en outre : une fonction d'actionneur de démarrage configurée avec une position de démarrage ;
lorsque les fonctions comprennent la fonction de lecture vocale configurée avec un contenu vocal à lire, le fait de commander à l'AGV par le module de commande de déplacement (52), d'exécuter une fonction correspondante lors de son déplacement sur le tronçon de route comprend :
lorsqu'il est détecté que l'AGV pénètre dans le tronçon de route, commander à l'AGV de commencer la lecture du contenu vocal configuré, et lorsqu'il est détecté que l'AGV quitte le tronçon de route, commander à l'AGV d'arrêter la lecture du contenu vocal ;
lorsque les fonctions comprennent la fonction de détection d'évitement d'obstacles configurée avec une distance de détection d'évitement d'obstacles, le fait de commander l'AGV pour qu'il exécute une fonction correspondante par le module de commande de déplacement (52) lors du déplacement sur le tronçon de route comprend :
lorsqu'il est détecté que l'AGV pénètre dans le tronçon de route, commander l'AGV pour qu'il commence à détecter les obstacles situés dans la distance de détection d'évitement d'obstacles configurée, et lorsqu'il est détecté que l'AGV quitte le tronçon de route, commander l'AGV pour qu'il cesse la détection ;
lorsque les fonctions comprennent la fonction d'actionneur de démarrage configurée avec une position de démarrage, le fait de commander l'AGV pour qu'il exécute une fonction correspondante par le module de commande de déplacement (52) lors du déplacement sur le tronçon de route comprend :
lorsqu'il est détecté que l'AGV pénètre dans le tronçon de route, détecter en temps réel si l'AGV atteint la position de démarrage pour démarrer l'actionneur, et si tel est le cas, commander l'AGV pour qu'il démarre l'actionneur.

9. L'appareil selon la revendication 6, dans lequel l'appareil est situé sur l'AGV,
pour chaque tronçon de route du parcours de la tâche, avant que le module de lecture des paramètres de commande de déplacement (51) ne lise un paramètre de commande de déplacement configuré pour le tronçon de route à partir d'une carte d'itinéraire de l'AGV, comprend en outre :
la réception d'un parcours de la tâche envoyé par un serveur de planification ;
pour chaque tronçon de route du parcours de la tâche, le module de lecture des paramètres de commande de déplacement (51), qui lit un paramètre de commande de déplacement configuré pour le tronçon de route à partir d'une carte d'itinéraire de l'AGV, comprend :
la lecture périodique, à partir de la carte d'itinéraire de l'AGV, d'un paramètre de commande de déplacement configuré pour un tronçon de route sur lequel se trouve la position actuelle de l'AGV, en fonction de la position actuelle de l'AGV ;
le module de commande de déplacement (52) commande l'AGV pour qu'il se déplace sur le tronçon de route correspondant en fonction du paramètre de commande de déplacement lu par le module de lecture des paramètres de commande de déplacement (51), et comprend :
la comparaison du paramètre de commande de déplacement lu avec un paramètre de commande de déplacement actuellement utilisé ; s'ils ne concordent pas, la mise à jour du paramètre de commande de déplacement actuellement utilisé avec le paramètre de commande de déplacement lu, puis le pilotage de l'AGV de se déplacer sur le tronçon de route actuel en fonction du paramètre de commande de déplacement actuellement utilisé mis à jour.

10. L'appareil selon la revendication 6, dans lequel le dispositif est situé sur un serveur de planification,
pour chaque tronçon de route du parcours de la tâche, avant que le module de lecture des paramètres de commande de déplacement (51) ne lise un paramètre de commande de déplacement configuré pour le tronçon de route à partir d'une carte d'itinéraire de l'AGV, comprend en outre :
la réception d'une tâche d'AGV et la planification du parcours de la tâche de ladite tâche d'AGV conformément à une carte d'itinéraire d'AGV préétablie, ainsi que l'envoi du parcours de la tâche à l'AGV ;
pour chaque tronçon de route du parcours de la tâche, le module de lecture des paramètres de commande de déplacement (51) lisant un paramètre de commande de déplacement configuré pour le tronçon de route à partir d'une carte d'itinéraire de l'AGV, comprend :
la réception d'une position actuelle de l'AGV envoyée périodiquement par l'AGV, et la lecture, à partir de la carte d'itinéraire de l'AGV, d'un paramètre de commande de déplacement configuré pour un tronçon de route où se trouve la position actuelle de l'AGV, en fonction de la position actuelle de l'AGV, ainsi que l'envoi dudit paramètre de commande de déplacement à l'AGV.

11. Un dispositif électronique, comprenant un processeur et une mémoire ;
la mémoire est configurée pour stocker un programme informatique ;
le processeur est configuré pour mettre en œuvre le procédé selon l'une quelconque des revendications 1 à 5 lors de l'exécution du programme stocké dans la mémoire.

12. Un support de stockage lisible par ordinateur, dans lequel un programme informatique est stocké, et lorsque ce programme informatique est exécuté par un processeur, les étapes du procédé selon l'une quelconque des revendications 1 à 5 sont mises en œuvre.
